(19) **Europäisches Patentamt**

**European Patent Office**

**Office européen des brevets**

(11) **EP 1 049 069 A2**

(12) **EUROPEAN PATENT APPLICATION**

(43) Date of publication:
**02.11.2000 Bulletin 2000/44**

(51) Int. Cl.⁷: **G09G 5/00**

(21) Application number: **00201441.3**

(22) Date of filing: **20.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.04.1999 JP 12474099**

(71) Applicant:
**Chugoku Sunnet Co., Ltd.**
**Hiroshima-shi (JP)**

(72) Inventor: **Izumihara, Masayuki**
**Hiroshima-shi (JP)**

(74) Representative:
**Kupecz, A., Drs. c.s.**
**Octrooibureau Los en Stigter B.V.**
**Weteringschans 96**
**1017 XS Amsterdam (NL)**

(54) **Display controller**

(57) The object of the present invention is to provide a display controller which may be simply operated joyfully and is suitable for a relaxation of eye tension.

A group of images consisting of a plurality of images disposed along approximately lateral direction is displayed on the display, and said images are moved so as for the distance between adjacent images to be extended, wherein each of said images is adapted to be stereoscopically visible by naked eyes between any adjacent images, so that the eye tension of the viewer thereof may be relaxed.

Fig. 1

**EP 1 049 069 A2**

## Description

### FIELD OF THE INVENTION

The present invention relates to a display controller for displaying a particular image on a display screen, and, in particular, to a display controller for displaying an image for relaxing a tension of eyes caused by a long time watching.

### BACKGROUND OF THE INVENTION

Recently a personal computer has widely spread throughout job sites and a game machine is spreading into every home, and thereby a time for watching a display is extending longer, which makes eyes tense up. A headache, a stiffness in the shoulder, an asthenopia, an amblyopia or the like which are caused by a severe burden on the eyes are emerging as a social problem.

Accordingly, in the light of the state above, several devices for relaxing the eye tension as well as for recovering eyesight have been provided.

For example, Japanese Patent Laid-Open Publication No Hei 6-14283 discloses a display device in which a position of a display screen varies gradually.

Further, Japanese Patent Laid-Open Publication No. Hei 7-51333 discloses an eyesight training device in which a point a diagram or a display color on an image display unit is properly moved or deformed.

Still further, Japanese Patent Laid-Open Publication No. Hei 9-201387 discloses a eyesight function improving display system in which a display screen is arranged in three-dimension.

Still further, Japanese Patent Laid-Open Publication No. Hei 10-15004 discloses an eyesight training device in which diagrams on an image display are collected or dispersed, or a background color or colors of the diagrams are changed.

Still further, Japanese Patent Laid-Open Publication No. Hei 10-49126 discloses a display controller with a function for curing an asthenopia, which is principally characterized by a color of a displayed image.

As described above, several devices for promoting a relaxation of the eye tension or the like have been provided.

Each device, however, has certain problems, for example, some require too complicated operation to be implemented in the intervals of the jobs or plays, or some take too long time, and accordingly each of them has some inconveniences in a practical use. In addition, they have also another problem that the displayed image is devoid of interest.

Accordingly, the object of the present invention is to provide a display controller which may be simply operated joyfully and is suitable for a relaxation of eye tension.

### SUMMARY OF THE INVENTION

The inventor of the present invention discloses an invention described below based on a fact that displaying a particular image has an improved effect on the relaxation of eyes tension of the viewer.

That is, according to the present invention, there is provided a display controller comprising a display device for displaying on a screen a group of images consisting of a plurality of images disposed along approximately lateral direction and a moving means for moving said images so that a distance between two adjacent images may be extended, wherein each of said images is adapted to be stereoscopically visible by naked eyes between any adjacent images.

In these means, since each of said images is adapted to be stereoscopically visible by naked eyes between any adjacent images, when a user see either of the adjacent two images by either of the left and the right eye individually and respectively, a user virtually sees a stereoscopic image generated by integrating said adjacent two images at more distant (deeper) point than the display screen. At that time, the user's eyes are in a state for actually looking for distant point, which may relax the eye tension as having been said from old days such that looking far makes eye refreshed.

In addition, since each of said images moves so that the distance between adjacent images may be extended, the user sees the stereoscopic image at the point gradually moving farther, which promotes more relaxation of the eye tension.

On the other hand, since what the user has to do is only to look at the image displayed on a screen, an operation is simple, and at the same time the user may feel little boredom or may feel some interest in the stereoscopic view by naked eyes.

Thus, the present invention provides an effective device which is suitable for relaxing the eye tension with simple operation while providing a joyful time.

Further, according to the present invention, there is provided a storage medium storing a program for controlling a computer for display control so as to function as a display device for displaying on a screen a group of images consisting of a plurality of images disposed along approximately lateral direction and also as a moving means for moving said images so that a distance between adjacent images may be extended, wherein each of said images is adapted to be stereoscopically visible by naked eyes between any adjacent images.

## BRIEF DESCRIPTION OF THE DRAWINGS

Fig. 1 is a block diagram illustrating a display controller in accordance with an embodiment of the present invention;
Fig. 2 is a flow chart illustrating processes performed by the display controller;
Fig. 3 shows an example of contents displayed on display 2 comprising steps of (a) to (e);
Fig. 4 shows an exemplary drawing which is illustrated with parallax and thereby is stereoscopically visible by naked eyes;
Fig. 5 a diagram for illustrating a principle why the stereoscopic image is perceived as if it moves in a depth direction;
Fig. 6 shows another example of contents displayed on display 2 comprising steps of (a) to (e);
Fig. 7 shows still another example of contents displayed on display 2 comprising steps of (a) to (e);
Fig. 8 shows still another example of contents displayed on display 2 comprising steps of (a) to (e);
Fig. 9 shows still another example of contents displayed on display 2 comprising steps of (a) to (e);
Fig. 10 shows still another example of contents displayed on display 2 comprising steps of (a) to (e);
Fig. 11 shows still another example of contents displayed on display 2 comprising steps of (a) to (e);
Fig. 12 shows still another example of contents displayed on display 2 comprising steps of (a) to (e);
Fig. 13 shows still another example of contents displayed on display 2 comprising steps of (a) to (e);
Fig. 14 is a drawing for illustrating a movement of a stereoscopically visible image;
Fig. 15 is another drawing for illustrating a movement of a stereoscopically visible image;
Fig. 16 shows a dialogue box for processing a setting; and
Fig. 17 shows a display controller in accordance with another embodiment

## DETAILED DESCRIPTION OF THE PREFERRED EMBODIMENT

The present invention may be applied also to a personal computer, an exclusive game machine, a television monitor or the like.

In the present invention, the term "a stereoscopically visible image by naked eyes" means an image illustrated with a parallax taken into account and, in particular, an image which one can stereoscopically view by naked eyes with so-called a parallel method.

In the present invention, two images are sufficient at the least for constructing a group of images described above. This is because a stereoscopic view by naked eyes can be performed by at least two images.

When a numbers of such images is disposed as much as possible with respect to a width of a display, since a user may look at all over the display and an observing point may not be focused on a particular point, there is provided an advantage in that the relaxation of eye tension is further promoted.

In addition, another advantage may be provided when there are many images. The stereoscopic view by naked eyes necessarily forms un-stereoscopic normal images seen in each end side of the stereoscopic image. For example, when the stereoscopic view by naked eyes is performed using two images, one stereoscopic image is seen at a center and further the normal images are seen in the left and the right sides thereof respectively. Though these normal images sometimes make one uncomfortable, if there are more than four images for constructing said group of images described above, there is provided another advantage in that one almost becomes not to feel uncomfortable about it.

To dispose images along approximately lateral direction means to dispose them along a direction approximately parallel with a line defined by connecting user's left and right eyes. This is because the stereoscopic view by naked eyes cannot be performed on these images if they are not disposed along the direction approximately parallel with said line defined by connecting one's left and right eyes. In most case, it may be approximately horizontal.

In addition, distances between respective adjacent images of said group of images may be or may not be uniform. The moving speed of said images may be any value so far as one's eyes can follow them, and preferably it is 0.3 mm/sec.

In the present invention, said display device can display a plurality of said groups of images. Displaying said plurality of groups of images prevents the observing point from being focused on a particular point and thereby may promote a relaxation of eye tension. In case of displaying a plurality of groups, for example, said plurality of groups of images may be disposed multiply in a vertical direction.

When said plurality of groups of images is displayed, said display device can display them not at a time but in order placing a time lag therebetween. Such variation in the display may attract a user's interest and may relax the user's eye tension while providing joyful time. Displaying them in order with time lag may includes, for example, a case where a group of images or some groups of images are displayed at a lime adding to groups of images having been displayed previously and eventually all of said groups of images are displayed as well as another case where as a number of displayed groups of images increases some groups of images displayed in earlier timing disappear in order.

Adding to that, in the present invention may be included further a means for moving said images as a unit of group of images. Variation in the display may attract a user's interest and may increase a momentum of eyeball to take a kink out of a surrounding muscle. The images may be moved along a vertical, horizontal or oblique direction and also may be swung.

Further, in the present invention, said display mean may be automatically actuated according to a predetermined condition. That is, displaying them as a screen saver may cause a user who has not pay much attention to a relaxation of eye tension to be aware of it to promote a use of the device of the present invention As for a condition to actuate the display device, a certain interval or an un-operating time may be employed and also a user may set it.

Still further, in the present invention, said moving means can move said images until said distance therebetween is extended up to approximately equal to the distance between pupils at the maximum. This is because the stereoscopic view by naked eyes can be scarcely performed when two images are disposed placing therebetween a distance approximately longer than that between the pupils. Therefore, when said distance reaches up to the distance between pupils, the movement may be stopped or the images concerned may disappear.

On the other hand, said distance before being moved by said moving means, that is, the minimum distance may be approximately a half of the distance between the pupils. This is because the stereoscopic view by naked eyes can be scarcely performed when two images are disposed placing therebetween a distance approximately shorter than a half of that between the pupils.

The distance between the pupils used herein means a distance between user's left and right eyes and user can set it individually. However, an average value thereof is about 6 cm, so that it may be treated as 6 cm in the device without variation.

Further, in the present invention, said display device can display other static images. By contrast with said static images, a visual impression of depth of the stereoscopic image generated by an integration through the stereoscopic view by naked eyes is exaggerated to make one feel as if one is looking farther point which promotes a relaxation of the eye tension.

Said static images may include a pair of static images being stereoscopically visible by naked eyes or a static image of mesh pattern displayed throughout the display screen. Displaying a mesh pattern provides an advantage in that a user who is not good at stereoscopic view by naked eyes may make it relatively easily.

In the present invention may be included further a repeating means for repeatedly actuating said display device and said moving means. Performing the stereoscopic view by naked eyes on said images repeatedly may promote the relaxation of the user's eye tension.

In the present invention may be included further a reduction means for reducing a size of the images as said distance therebetween is extended. Reducing the size of said images exaggerates a visual impression of depth of the stereoscopic image generated by an integration through the stereoscopic view by naked eyes to make one feel as if one is looking farther, which promotes a relaxation of the eye tension.

In the present invention may be included further a deforming means for deforming the images as said distance therebetween is extended. Deforming the images may attract a user's interest and may relax the eye tension while providing a joyful time.

In the present invention may be included further a color changing means for changing a density of colors of the images as said distance therebetween is extended. This may also attract a user's interest and may relax the eye tension while providing a joyful time.

In the present invention, said display device may further display a background image, and in the present invention may be included further a means for changing the colors of the stereoscopically visible images so as to get nearer to that of the background image as said distance is extended. This may again also attract a user's interest and may relax the eye tension while providing a joyful time.

In the present invention may be included further another means for providing music. Looking at the display while listening to music may make the user relaxed, which may promote a relaxation of eye tension indirectly.

In the present invention, said display device may gradually display the images and may make them disappear gradually when said distance there between exceeds a predetermined value. This prevents the user's eye tension from being stressed which might be caused when the images appear suddenly.

There will now be described in detail preferred embodiments of the present invention with reference to the appended drawings.

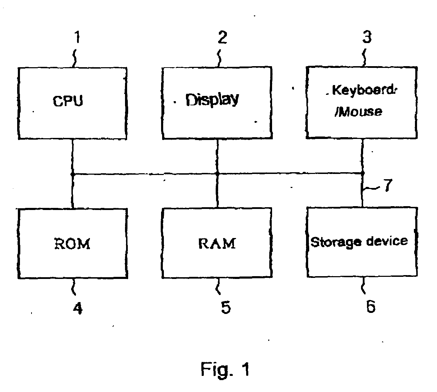

Fig. 1 is a block diagram illustrating a schematic structure of a display controller in accordance with an embodiment of the present invention.

The display controller comprises a CPU 1, a display 2, a keyboard/mouse 3, a ROM 4, a RAM 5, a storage device 6 and a system bus 7.

The display 2 is used to display a process performed in this display controller and, in particular, an image stereoscopically visible by naked eyes, but it requires no specific constitution and, for example, a CRT, a liquid crystal display may be employed for it.

The keyboard/mouse 3 is used for a user to input a command or the like.

The ROM 4 stores a program to be run on the CPU 1.

The RAM 5 is used for the CPU 1 to temporally store a data

The storage device 6 may be a hard disk a floppy disk (FD), a CD-ROM disk or the like. This can store a data of an image or the like to be displayed on the display 2.

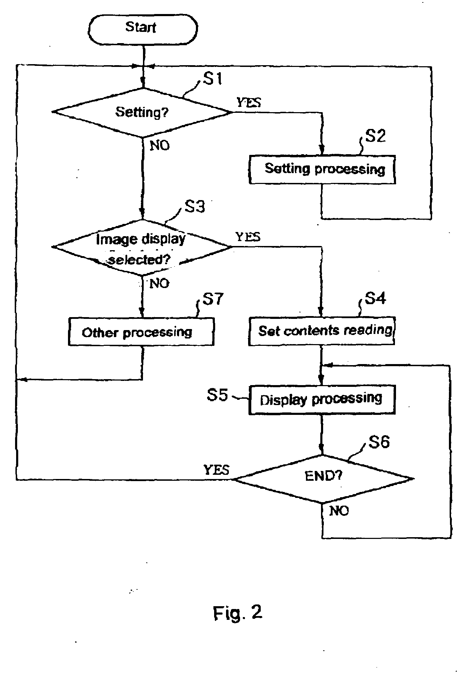

The CPU 1 controls each component described above through the system bus 7, and functions as each means (display device, moving means or the like) described above according to the program stored in the ROM 4 or the storage device 6, and executes a process shown in a flowchart in Fig. 2.

Then the process will be described.

In step S1, it is determined whether or not the user selects a setting for a display form or the like of an image stereoscopically visible by naked eyes (hereafter, sometimes referred to as a stereoscopically visible image) for relaxing an eye tension. When the setting is selected, the process moves to step S2 and executes a setting processing described below. When the setting is not selected, the process moves to step S3.

In step S3, it is determined whether or not a display of the stereoscopically visible image is selected. This selection includes a case where the user selects through the input from the keyboard/mouse 3 and another case where the CPU 1 automatically selects based on a predetermined condition such as an elapsed time.

When the display of me stereoscopically visible image is selected, the process moves to step S4, while not selected, it moves to step S7.

In step S7, other processing than the display of the stereoscopically visible image, for example, an execution of an application program or the like is executed and then the process returns to step S1.

In step S4, a content set in step S2 is read in order to decide a form for displaying the stereoscopically visible image.

In step S5, the stereoscopically visible image for relaxing eye tension is displayed on the display 2. After having been displayed, the process moves to step S6 and determines whether or not it shall be displayed repeatedly. When the displaying of the stereoscopically visible image is determined to be ended, the process returns to step S1, while the process returns to step S5 when being determined to be displayed repeatedly.

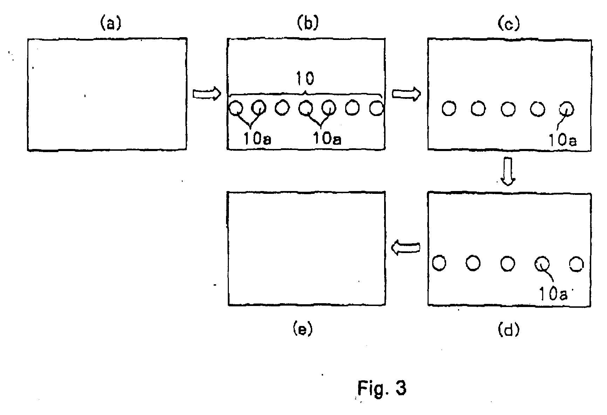

Then, the stereoscopically visible image displayed on the display 2 in step S5 will be described. Fig. 3 shows a series of images displayed on the display 2 in a simplified form for a convenience of explanation.

In Fig. 3(a), nothing is displayed.

In Fig. 3(b), a group of images 10 consisting of seven stereoscopically visible images 10a is displayed. Each of the stereoscopically visible images 10a described herein is illustrated by a circle as an abstracted symbol for convenience (the same pattern may be employed in other examples).

Each of the seven stereoscopically visible images 10a is a planar image which can substantially make together with an adjacent image a stereoscopically visible image respectively and is arranged in line along a lateral (horizontal) direction of the display screen.

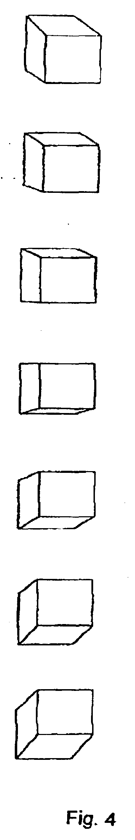

In concrete, each of these seven stereoscopically visible images 10a is an image formed with slightly different parallax with each other and an example of such images are shown in Fig. 4.

Fig. 4 shows seven diagrams formed with slightly different parallaxes with each other. When one looks at one of these diagrams by one's left eye and looks at a right adjacent diagram thereof by one's right eye (so-called parallel method), two adjacent diagrams are integrated with each other and are seen as a stereoscopic diagram. In concrete, when one stereoscopically views the diagrams of Fig. 4, one will see six stereoscopic diagrams and also two non-stereoscopic diagrams each respectively disposed in either end side when one observes carefully. At that time, each of these stereoscopic diagrams will be seen in a position deeper than that of an actual paper surface.

That is, in Fig. 3(b), when the user stereoscopically views by naked eyes the stereoscopically visible images 10a, the stereoscopic image is generated by integrating them in a position deeper than that of the screen of the display 2 and the user has an illusion that he is looking farther. As a result the eye tension may be relaxed.

Fig. 3(c) shows one of a series of stages for moving the stereoscopically visible images 10a.

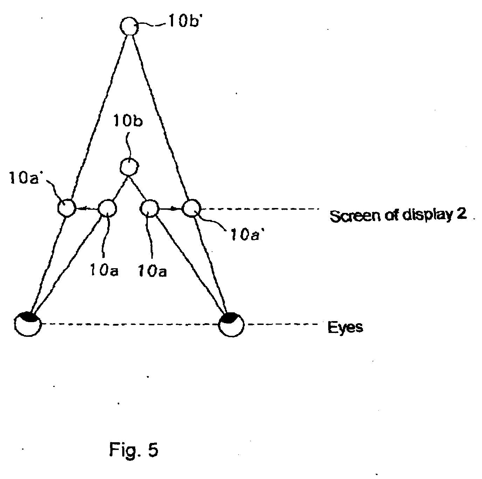

Each of the stereoscopically visible images 10a is continually moved so that the distance from the adjacent stereoscopically visible image 10a may be extended. This gives one stereoscopically viewing by naked eyes these stereoscopic images 10a an illusion that the stereoscopic image generated by integrating each of the stereoscopic images 10a moves to a deeper position. This will be described with reference to Fig. 5. In Fig. 3(c), two stereoscopically visible images 10a each being disposed in either end disappear since they cannot be accommodated within the screen of the display 2.

In Fig. 5, "eyes" indicate user's left and right eyes. Two stereoscopically visible images 10a are displayed on the "screen of the display 2". When the two stereoscopically visible images 10a are stereoscopically viewed by naked eyes, a stereoscopic image 10b is seen. Then, it is assumed that each of two stereoscopically visible images 10a is moved to 10a' respectively so as for the distance therebetween to be extended along an arrow direction respectively. Since each of the user's left and right eyes follows it and accordingly is rotated outward respectively, the stereoscopic image 10b is generated by integrating them at 10b', which makes user perceive as if the stereoscopic image 10b moves toward deeper direction of the screen of the display 2, that is, the user has an illusion of looking father. As a result, the relaxation of eye tension is further promoted.

Fig. 3(d) shows another stage where the stereoscopically visible images 10a are further moved. Fig. 3(e) shows also still another stage where all the stereoscopically visible images 10a have disappeared.

Displaying the images for relaxing the eye tension is completed by that. A series of displaying stages described above may be defined as one cycle and may be repeated again. A determination method for determining a coordinate of each of the stereoscopically visible images 10a during movement thereof will be described later (in "As regards a movement of the stereoscopically visible image").

Then some examples of contents displayed on the display 2 will be shown and described below.

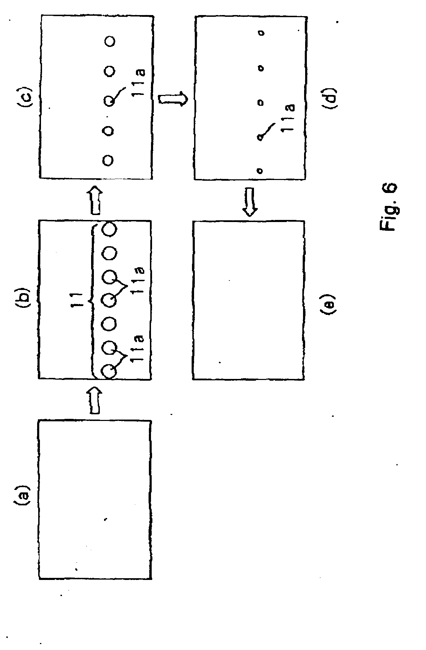

In an example of display shown in Figs. 6(a) to 6(e), the stereoscopically visible images are reduced in size thereof as they move.

In Fig. 6(a), nothing is displayed and, in Fig. 6(b), a group of images 11 consisting of seven stereoscopically visible images 11a is displayed. In Fig. 6(c), a distance between each of the stereoscopically visible images 11a is extending and a size of each stereoscopically visible image 11a is being gradually reduced while keeping similar figure. In Fig. 6(d), a distance between each of the stereoscopically visible images 11a is further extending and a size of each stereoscopically visible image 11a is further being reduced. In Fig. 6(e), all the stereoscopically visible images 11a have disappeared.

Reducing a size of the stereoscopically visible images 11a as described above makes one perceive as if the stereoscopic image generated by integrating them moves toward a deeper direction and accordingly makes one have an illusion of looking father, which promote a relaxation of eye tension.

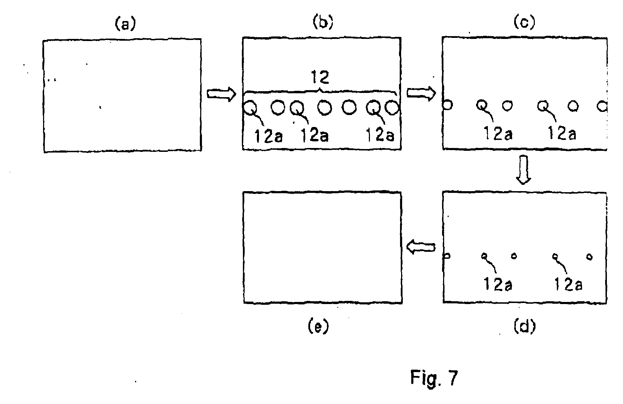

In an example of display shown in Figs. 7(a) to 7(e), the stereoscopically visible image is reduced in size as of Fig. 6, in which a distance between each stereoscopically visible image is not uniform but has a variation.

In Fig. 7(a), nothing is displayed and, in Fig. 7(b) a group of images 12 consisting of seven stereoscopically visible images 12a is displayed. The distance between each of the stereoscopically visible images 12a is not uniform, that is, there are wider distance as well as narrower distance. In Fig. 7(c), the distance between each of the stereoscopically visible images 12a is extending and a size of each stereoscopically visible image 12a is being reduced. In this example, extending rate of the distance is kept constant regardless of the width thereof. In Fig. 7(d), the distance is extending further and the size of the stereoscopically visible image is being reduced further. In Fig. 7(e), all the stereoscopically visible images have disappeared.

Non-uniform distance between each of the stereoscopically visible images may introduce a certain interest into the display.

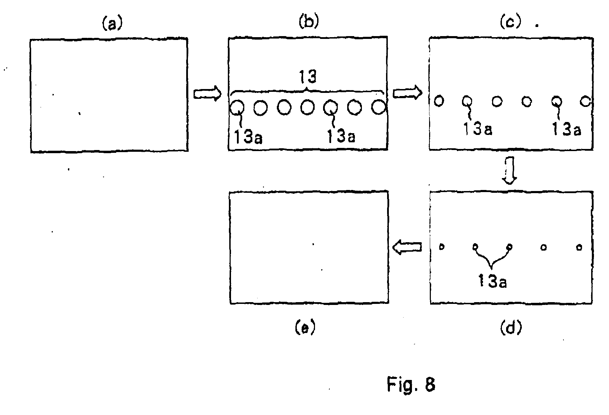

In an example of display shown in Figs. 8(a) to 8(e), the stereoscopically visible image is reduced in size as of Fig. 6, in which the group of images is moved upward as a unit of the group of images.

In Fig. 8(a), nothing is displayed and, in Fig. 8(b) a group of images 13 consisting of seven stereoscopically visible images 13a is displayed. In Fig. 8(c), the distance between each of the stereoscopically visible images 13a is extending and each of the stereoscopically visible images 13a is moving upward as a whole or as a unit of the group of images 13. In Fig. 8(d), the distance is extending further and the group of images 13 is moving upward. In Fig. 8(e), all the stereoscopically visible images 13a have disappeared.

Moving the group of images may relieve the user of boredom without causing his eye tension. The group of images may be moved along lateral or oblique direction other than the vertical direction and also may be swung.

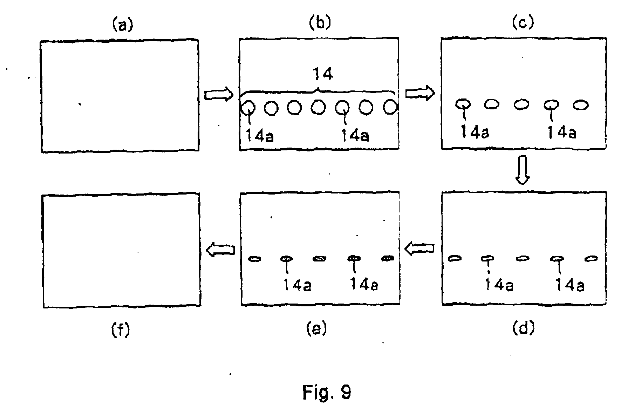

In an example of display shown in Figs. 9(a) to 9(f), the stereoscopically visible image is reduced in size as of Fig. 6, in which the stereoscopically visible image is deformed. In addition, a color of the stereoscopically visible image is changed.

In Fig. 9(a), nothing is displayed and, in Fig 9(b), a group of images 14 consisting of seven stereoscopically visible images 14a is displayed. In Fig. 9(c), the distance between each of the stereoscopically visible images 14a is extending and a shape of each stereoscopically visible image 14a is being deformed from an original circular shape to an elliptical one. This elliptical shape of diagram also is a stereoscopically visible image. In Fig. 9(d), the distance is extending further and the stereoscopically visible image 14a is being deformed more to a thinner elliptical shape. In Fig.

9(e), a color of the stereoscopically visible image 14a is also changed. In Fig. 9(f), all the stereoscopically visible images 14a have disappeared

Deforming the stereoscopically visible image as described above may relieve the user of boredom.

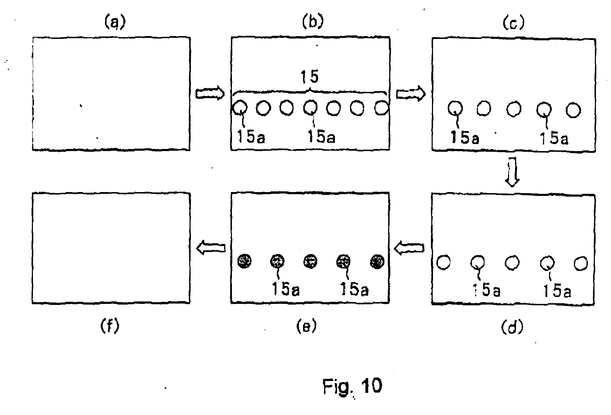

In an example of display shown in Figs. 10(a) to 10(f), a density of color of the stereoscopically visible image is changed.

In Fig. 10(a), nothing is displayed and, in Fig. 10(b), a group of images 15 consisting of seven stereoscopically visible images 15a is displayed. In Fig. 10(c), the distance between each of the stereoscopically visible images 15a is extending and, in Fig. 10(d), the distance is further extending. In Fig. 10(e), a color of each stereoscopically visible image 15a is changed. In Fig. 10(f), all the stereoscopically visible images 15a have disappeared.

Changing the color of the stereoscopically visible image as described above may relieve the user of boredom. Adding to the change of the density of color, the color itself may be changed, and, in particular, it may be gradually changed so as to get nearer to that of the background on the display screen.

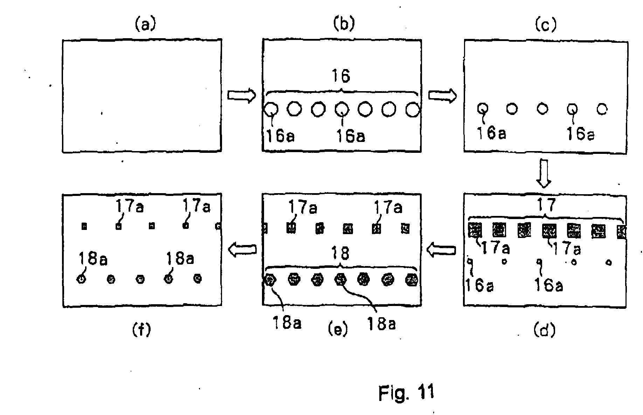

In an example of display shown in Figs. 11(a) to 11(f), the stereoscopically visible image is reduced in size as of Fig. 6, in which a plurality of groups of images is displayed and, in particular, each group of said plurality of groups of images is displayed in order with some time lag with each other.

In Fig. 11(a), nothing is displayed and, in Fig. 11(b), a group of images 16 consisting of seven circular stereoscopically visible images 16a is displayed. In Fig. 11(c), the distance between each of the stereoscopically visible images 16a of the group of images 16 is extending and the size of each stereoscopic visible image 16a is being reduced. In Fig. 11(d), the size of the group of circular images 16 is reduced further, and an additional group of images 17 consisting of seven square stereoscopically visible images 17a is displayed. That is, a plurality of groups of images is displayed multiply.

In Fig. 11(e), the group of images 16 has disappeared, and the distance between each of the stereoscopically visible images 17a of the group of images 17 is extending while the size of each stereoscopic visible image 17a is being reduced, and an additional group of images 18 consisting of seven hexagonal stereoscopically visible images 18a is displayed. In Fig. 11(f), the distance between each of the stereoscopically visible images 17a as well as that of 18a is extending and the size of each stereoscopically visible image 17a as well as that of 18a is being reduced.

Adding a variation onto the display as described above may attract a user's interest and may relax the user's eye tension while providing joyful time. Though the stereoscopically visible images 16 are made to disappear in this example of display, they may remain as reduced forms.

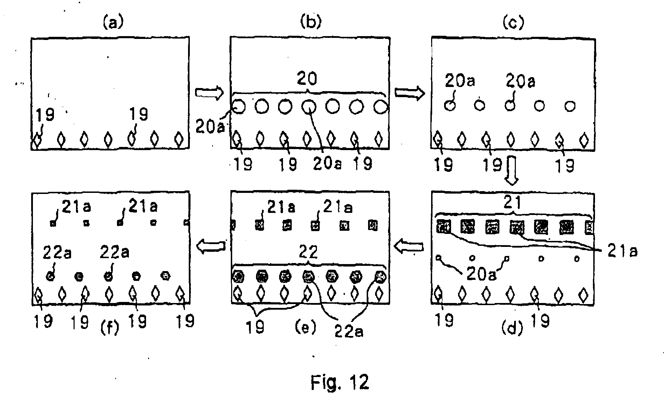

In an example of display shown in Figs. 12(a) to 12(f), a plurality of groups of images is displayed multiply as of Fig. 11, in which a static image is displayed also.

In Fig 12(a), only a plurality of rhombic static images 19 is displayed. In Fig. 12(b), a group of images 20 consisting of seven circular stereoscopically visible images 20a is displayed together with the rhombic static image 19. In Fig. 12(c), though the distance between each of the stereoscopically visible images 20a of the group of images 20 is extending and the size of each stereoscopic visible image 20a is being reduced, the rhombic static image 19 remains as it was and does not change in the following stages. In Fig. 12(d), the size of the group of circular images 20 is reduced further, and an additional group of images 21 consisting of seven square stereoscopically visible images 21a is displayed.

In Fig. 12(e), the group of images 20 has disappeared, and the distance between each of the stereoscopically visible images 21a of the group of images 21 is extending while the size of each stereoscopic visible image 21 a is being reduced, and an additional group of images 22 consisting of seven hexagonal stereoscopically visible images 22a is displayed. In Fig. 12(f), the distance between each of the stereoscopically visible images 21 a as well as that of 22a is extending and the size of each stereoscopically visible image 21 a as well as that of 22a is being reduced. In each stage, the static image 19 remains as it was without any change.

When the static image is displayed as described above, one may perceive more a depth of the stereoscopic image generated by the stereoscopic view.

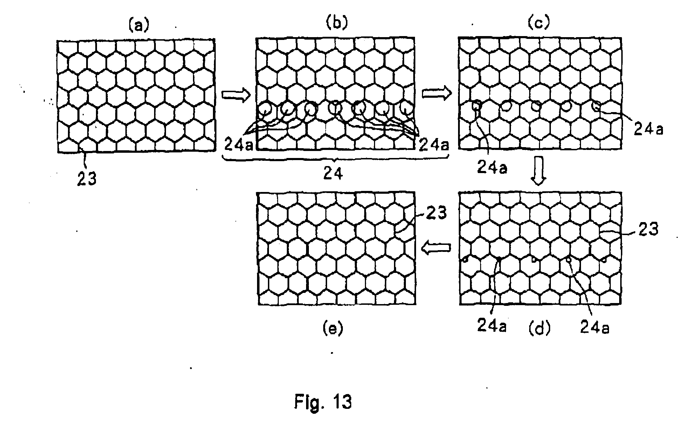

In Fig. 13, a mesh pattern is displayed as a static image throughout the screen of display 2.

In Fig. 13(a), only the static image 23 of mesh pattern is displayed. In Fig. 13(b), a group of images 24 consisting of seven stereoscopically visible images 24a is displayed. In Fig. 13(c), the distance between each of the stereoscopically visible images 24a is extending while the size of each stereoscopic visible image 24a is being reduced. The static image 23 remains as it was without any change. In Fig. 13(d), each of the stereoscopically visible images 24a is significantly reduced in size and has disappeared in Fig. 13(e). The static image 23 of mesh pattern remains without any change.

Existence of the static image of such mesh pattern generally provides an advantage in that the integration of the stereoscopically visible images or the stereoscopic view by naked eyes may be performed more easily.

Some examples displayed on the display 2 have been described above, and it is a matter of course that a feature of each example may be combined with each other.

As regards a movement of the stereoscopically visible image

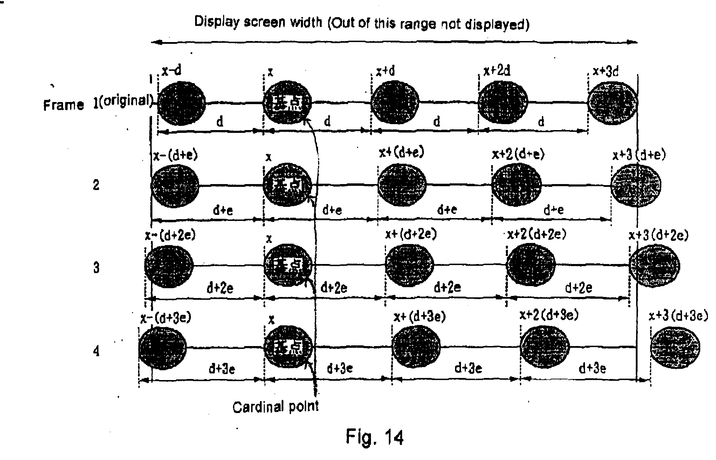

The movement of each stereoscopically visible image may be executed by determining one of the stereoscopically visible images as a cardinal point and applying a serial transformation to coordinates of other stereoscopically visible images. Fig. 14 is a drawing for illustrating a movement of the stereoscopically visible images.

In Fig. 14, a display screen width corresponds to a horizontal displayable width of the display 2 and each of frames 1 to 4 shows each display of the stereoscopically visible images during movement. An elliptical shape of diagram illustrates a stereoscopically visible image.

The frame 1 shows an original position of each stereoscopically visible image before being moved and a second one from the left side is selected as a cardinal point (coordinate x). The distance between each of the stereoscopically visible images is "d".

The frame 2 shows a state where each of the stereoscopically visible images is moved until the distance therebetween is extended up to "d + e". At that time, the second stereoscopically visible image from the left side which is the cardinal point is not moved. A value of x-coordinate of each stereoscopically visible image other than that of the cardinal one is added or subtracted by "n x e" (n is a number of each stereoscopically visible image counted from the cardinal one and will be used in the same meaning in the description below). As can be seen, the stereoscopically visible image in the right end side is in a state where a part thereof has not been displayed on the display 2.

The frame 3 shows a state where each of the stereoscopically visible images is moved until the distance therebetween is extended up to "d + 2e". A value of x-coordinate of each stereoscopically visible image other than that of the cardinal one is added or subtracted by "n x 2e" to or from each original value. As can be seen, each of the stereoscopically visible images in the right end side or in the left end side is in a state where a most part thereof or a part thereof has not been displayed on the display 2 respectively.

The frame 4 shows a state where each of the stereoscopically visible images is moved until the distance therebetween is extended up to "d + 3e". A value of x-coordinate of each stereoscopically visible image other than that of the cardinal one is added or subtracted by "n x 3e" to or from each original value. As can be seen, the stereoscopically visible images in the right end side is in a state where it has not been displayed on the display 2 completely.

In the following stages, each of the stereoscopically visible images is moved until the distance therebetween reaches up to a predetermined value in the same manner as described above.

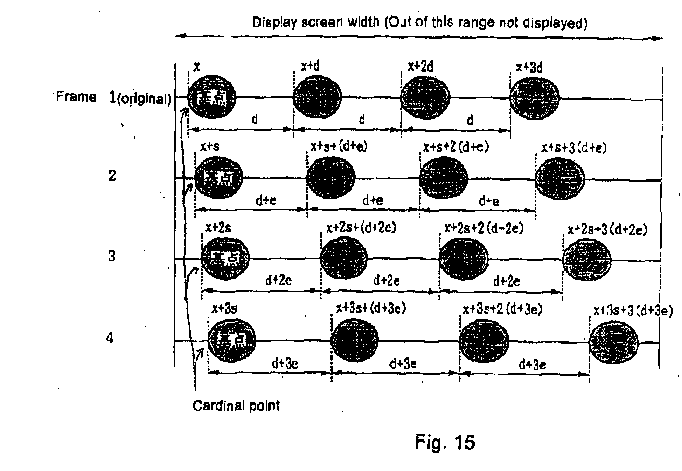

Then a manner how to extend the distance between each of the stereoscopically visible images while moving them as a whole will be described with reference to Fig. 15. Fig. 15 is a similar drawing to Fig. 14 for illustrating a movement of a stereoscopically visible image.

In order to move each of the stereoscopically visible images as a whole while moving each of them so as for the distance therebetween to be extended, a position of the cardinal point shall be moved while continuing the same processing as of Fig. 14.

In Fig. 15, a frame 1 shows an original position of each stereoscopically visible image before being moved and one in the most left side is selected as a cardinal point (coordinate x). The distance between each of the stereoscopically visible images is "d".

A frame 2 shows a state where each of the stereoscopically visible images is moved until the distance therebetween is extended up to "d + e" and also is moved by "s" to the right as a whole.

At that time, a x-coordinate of the most left stereoscopically visible image which is the cardinal point is moved by "s". A value of x-coordinate of each stereoscopically visible image other than that of the cardinal one is added by "s + n x e ".

A frame 3 shows a state where each of the stereoscopically visible images is moved until the distance therebetween is extended up to "d + 2e" and also is moved by "2s" from the original position to the right as a whole.

At that time, a x-coordinate of the most left stereoscopically visible image which is the cardinal point is moved by "2s" from the original position thereof. A value of x-coordinate of each stereoscopically visible image other than that of the cardinal one is added by "2s + n x e " to each original value thereof respectively.

A frame 4 shows a state where each of the stereoscopically visible images is moved until the distance therebetween is extended up to "d + 3e" and also is moved by "3s" from the original position to the right as a whole.

At that time, a x-coordinate of the most left stereoscopically visible image which is the cardinal point is moved by "3s" from the original position thereof A value of x-coordinate of each stereoscopically visible image other than that of the cardinal one is added by "3s + n x e " to each original value thereof respectively.

In the following stages, each of the stereoscopically visible images is moved until the distance therebetween reaches up to a predetermined value in the same manner as described above. As can be seen, a travel of the most right stereoscopically visible image is the longest.

Setting processing

In step S2, a user makes a setting by GUI (graphical user interface) so that an image desired by the user may be displayed.

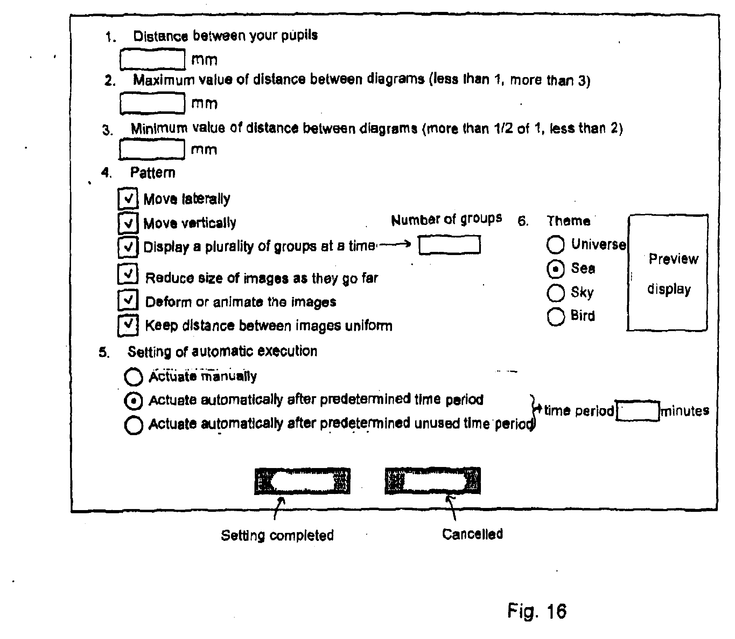

Fig 16 shows an example of a dialog box used in the setting.

A distance between own pupils is input into a space in "1. Distance between your pupils". When nothing is input, it may be automatically set to 6 cm as a default value. This distance between pupils may be used to determine a maximum and a minimum values of the distance between the stereoscopically visible images described above.

The maximum value of the distance between the stereoscopically visible images, which is desired by the user, is input into a space in "2. Maximum value of distance between diagrams". A value greater than that input into the space in "1. Distance between your pupils" cannot be input. Here again, when nothing is input, this value may be automatically set to 6 cm as a default value.

The minimum value of the distance between the stereoscopically visible images, which is desired by the user, is input into a space in "3. Minimum value of distance between diagrams". A value smaller than 1/2 of the value input into the space in "1. Distance between your pupils" cannot be input. When nothing is input, this value may be automatically set to 3 cm as a default value.

In "4. Pattern", a form for moving the stereoscopically visible images or the like is selected. Desired item may be selected by inputting a check into respective checkboxes. A plurality of items may be selected. The stereoscopically visual images are moved according to the contents of the check(s).

In "5. Setting of automatic excursion", whether the display of the stereoscopically visible image shall be automatically actuated or shall be manually actuated is selected by checking radio buttons. When the automatic actuation is selected, a condition for the actuation, that is, a certain period of elapsed time or a certain period of unused time may be further selected, and also a value of said time period may be set The automatic actuation may be used as a screen saver.

In "6 Theme", a content of the stereoscopically visible images is selected. A radio button for the desired content may be checked. At that time, a preview screen is displayed so that a schematic pattern of the selected stereoscopically visible image may be checked.

The setting process has been completed by above operations.

Then, another embodiment of the present invention will be described.

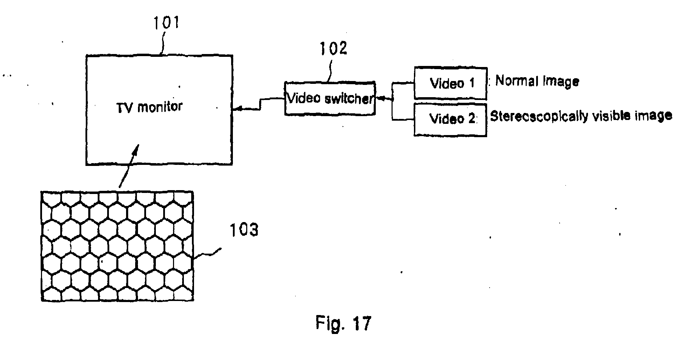

Fig. 17 is a diagram of a display controller according to another embodiment of the present invention.

This display controller comprises a video switcher 102 connected to the television monitor 101 and two video players 1 and 2.

The video player 1 is used to output a user's preferring output, such as movie, animation, sport or the like.

The video player 2 is used to output the stereoscopically visible images displayed by the display controller of the present invention described above. That is, the video player 2 outputs the images characterized in that a plurality of images is disposed along approximately lateral direction, and said images are moved so as for a distance between adjacent images to be extended, and each of said images is adapted to be stereoscopically visible by naked eyes between any adjacent images

The video switcher 102 provides an image signal from either of the video player 1 or 2 by switching therebetween, and said switching operation may be performed manually as well as automatically.

In this device, for example, when a child is looking at an image from the video player 1 for a long time, a parent of the child may switch the video switcher 102 so as to output a signal from the video player 2 into the television monitor 101, so that an image for relaxing the eye tension may be displayed to prevent the possible amblyopia of the child. Attaching a transparent film sheet 103 with a mesh pattern printed thereon onto a screen of the television monitor 101 may make the stereoscopic view by naked eyes to be performed easily.

It is a matter of course that the present invention may be accomplished when a computer is provided with a storage medium having a program code of software stored therein for performing a function of the embodiments described above and said computer reads and executes the program code stored in said storage media, and also said storage medium is included in the scope of the present invention

Actual test result

The present invention will be described further in detail in combination with some data of actual test and comparison test.

Actual test data

Ten company employees who are about 20 years old and use computers in their daily jobs worked for the test. They looked at the display generated by the display controller of the present invention under a certain condition and their fatigue level was measured by VAS (Visual Analogue Scale) value.

They looked at it during their job time once an hour (eight times a day) for about one minute. They continued this schedule for one week

A content displayed was a color image including six stereoscopically visible images disposed with uniform intervals in line along a horizontal direction and also the static image is displayed adding to the stereoscopically visible images.

Each of the stereoscopically visible images is moved at a speed of about 0.3 m/s so that the distance therebetween may extend.

The test result is shown in Table 1. An average of the VAS values is 37.5.

Table 1

| Subject No. | Sex | Age | Correction | Refractive index (S) | Astigmatic degree (C) | Astigmatic angle (A) | VAS value |
|---|---|---|---|---|---|---|---|
| 1 | M | 18 | | -0.25 | 0.00 | | 28.2 |
| 2 | M | 18 | | -0.50 | 0.00 | | 33.3 |
| 3 | M | 18 | Glasses | -1.00 | -0.25 | 3 | 36.0 |
| 4 | M | 20 | | -0.50 | -0.75 | 88 | 42.1 |
| 5 | M | 20 | | -1.00 | -0.50 | 92 | 40.8 |
| 6 | M | 22 | CL | -0.50 | -1.00 | 179 | 52.0 |
| 7 | M | 24 | Glasses | 0.00 | 0.00 | | 46.6 |
| 8 | F | 18 | | -0.50 | -0.25 | 11 | 24.7 |
| 9 | F | 18 | CL | -0.75 | -0.25 | 9 | 33.1 |
| 10 | F | 22 | CL | -0.50 | -0.75 | 2 | 38.1 |
| Ave. | | | | | | | 37.5 |

Comparison test data

Another ten company employees who are also about 20 years old and have similar conditions in eyes and job contents with those of the members joined to above actual test worked for the comparison test. They worked for a week as they had been without looking at the display generated by the display controller of the present invention and their fatigue level was measured by VAS (Visual Analogue Scale) value.

The test result is shown in Table 2. An average of the VAS values is 59.4.

Table 2

| Subject No. | Sex | Age | Correction | Refractive index (S) | Astigmatic degree (C) | Astigmatic angle (A) | VAS value |
|---|---|---|---|---|---|---|---|
| 1C | M | 18 | | -0.25 | -0.50 | 23 | 59.4 |
| 2C | M | 18 | | -0.50 | -0.75 | 90 | 55.5 |
| 3C | M | 18 | Glasses | -0.50 | -0.75 | 88 | 62.3 |
| 4C | M | 19 | | -0.75 | -0.25 | 0 | 70.0 |
| 5C | M | 20 | | -1.25 | -1.00 | 2 | 48.3 |
| 6C | M | 22 | CL | -0.50 | -1.25 | 78 | 52.5 |
| 7C | M | 24 | Glasses | 0.25 | 0.00 | | 60.6 |
| 8C | F | 18 | | -0.25 | 0.00 | | 50.8 |

Table 2 (continued)

| Subject No. | Sex | Age | Correction | Refractive index (S) | Astigmatic degree (C) | Astigmatic angle (A) | VAS value |
|---|---|---|---|---|---|---|---|
| 9C | F | 18 | CL | -0.50 | -1.00 | 69 | 63.2 |
| 10C | F | 22 | CL | -0.50 | -0.25 | 178 | 71.3 |
| Ave. | | | | | | | 59.4 |

The number of the subject in Table 2 respectively corresponds to that of the actual test, and the subject having similar condition in eyes and job contents but being other than that of the actual test is selected respectively.

By comparison between both results, it is found that the subjects who looked at the display generated by the display controller of the present invention have 20 point lower average VAS value of the subjective fatigue symptoms level than that of the subjects who did not looked at it.

Effect of the invention

As having been described above, the present invention provides an effective device or method which is suitable for relaxing the eye tension with simple operation while providing a joyful time.

**Claims**

1.  A display controller comprising:

    a display device for displaying on a screen a group of images consisting of a plurality of images each being disposed along approximately lateral direction; and
    a moving means for moving said images so that a distance between adjacent images may be extended;
    wherein each of said images is adapted to be stereoscopically visible by naked eyes between any adjacent images.

2.  A display controller in accordance with claim 1, in which said display device displays a plurality of said groups of images.

3.  A display controller in accordance with claim 2, in which said display device displays each of said groups of images in order placing a time lag therebetween.

4.  A display controller in accordance with either of claim 1 to 3 further comprising a means for moving said images as a unit of said group of images.

5.  A display controller in accordance with either of claim 1 to 4, in which said display device is automatically actuated according to a predetermined condition.

6.  A display controller in accordance with either of claim 1 to 5, in which said moving means moves said images until said distance between adjacent images is extended up to approximately equal to a distance between pupils at the maximum.

7.  A display controller in accordance with either of claim 1 to 6, in which said distance between adjacent images is approximately equal to a half of the distance between the pupils in the minimum.

8.  A display controller in accordance with either of claim 1 to 7, in which said display device further displays other static images.

9.  A display controller in accordance with claim 8, in which said static images include a pair of images being stereoscopically visible by naked eyes.

10. A display controller in accordance with claim 8, in which said static images include a mesh pattern image displayed throughout said display.

**11.** A display controller in accordance with either of claim 1 to 10 further comprising a repeating means for repeatedly actuating said display device and said moving means.

**12.** A display controller in accordance with either of claim 1 to 11 further comprising a reduction means for reducing a size of said images as said distance between adjacent images is extended.

**13.** A display controller in accordance with either of claim 1 to 12 further comprising a deforming means for deforming said images as said distance between adjacent images is extended.

**14.** A display controller in accordance with either of claim 1 to 13 further comprising a color changing means for changing a density of colors of said images as said distance between adjacent images is extended.

**15.** A display controller in accordance with either of claim 1 to 14, in which said display device further displays a background image and said controller further comprises a means for changing the colors of said stereoscopically visible images so as to get nearer to that of said background image as said distance between adjacent images is extended.

**16.** A display controller in accordance with either of claim 1 to 15 further comprising a means for providing music.

**17.** A display controller in accordance with either of claim 1 to 16, in which said display device gradually displays said stereoscopically visible images and makes said images gradually disappear when said distance between adjacent images exceeds a predetermined value.

**18.** A storage medium storing a program for controlling a computer for display control so as to function as a display device for displaying on a screen a group of images consisting of a plurality of images disposed along approximately lateral direction and as a moving means for moving said images so as for a distance between adjacent images to be extended, each of said images being adapted to be stereoscopically visible by naked eyes between any adjacent images.

**19.** A storage medium in accordance with claim 18, in which said display device displays a plurality of said groups of images.

**20.** A storage medium in accordance with claim 19, in which said display device displays each of said groups of images in order placing a time lag therebetween.

**21.** A storage medium in accordance with either of claim 18 to 20, in which said program includes a program for controlling the computer so as to function as a means for moving said images as a unit of said group of images.

**22.** A storage medium in accordance with either of claim 18 to 21, in which said display device is automatically actuated according to a predetermined condition.

**23.** A storage medium in accordance with either of claim 18 to 22, in which said moving means moves said images until said distance between adjacent images is extended up to approximately equal to a distance between pupils at the maximum.

**24.** A storage medium in accordance with either of claim 18 to 23, in which said distance between adjacent images before being moved is approximately equal to a half of the distance between the pupils.

**25.** A storage medium in accordance with either of claim 18 to 24, in which said display device further displays other static images.

**26.** A storage medium in accordance with claim 25, in which said static images include a pair of images being stereoscopically visible by naked eyes.

**27.** A storage medium in accordance with claim 25, in which said static images include a mesh pattern image displayed throughout said display.

**28.** A storage medium in accordance with either of claim 18 to 27, in which said program includes a program for controlling the computer so as to function as a repeating means for repeatedly actuating said display device and said moving means.

29. A storage medium in accordance with either of claim 18 to 28, in which said program includes a program for controlling the computer so as to function as a reduction means for reducing a size of said images as said distance between adjacent images is extended.

30. A storage medium in accordance with either of claim 18 to 29, in which said program includes a program for controlling the computer so as to function as a deforming means for deforming said images as said distance between adjacent images is extended.

31. A storage medium in accordance with either of claim 18 to 30, in which said program includes a program for controlling the computer so as to function as a color changing means for changing a density of colors of said images as said distance between adjacent images is extended.

32. A storage medium in accordance with either of claim 18 to 31, in which said display device further displays a background image and said program includes a program for controlling the computer so as to function as a means for changing the colors of said stereoscopically visible images so as to get nearer to that of said background image as said distance between adjacent images is extended.

33. A storage medium in accordance with either of claim 18 to 32, in which said program includes a program for controlling the computer so as to function as a means for providing music.

34. A storage medium in accordance with either of claim 18 to 33, in which said display device gradually displays said stereoscopically visible images and makes said images gradually disappear when said distance between adjacent images exceeds a predetermined value.

35. A display controller comprising a television monitor and a switching device for outputting one of two image signals to said television monitor by switching therebetween, wherein a content of said one image signal is images characterized in that a plurality of images is disposed along approximately lateral direction, and said images are moved so as for a distance between adjacent images to be extended, each of said images being adapted to be stereoscopically visible by naked eyes between any adjacent images.

Fig. 1

Fig. 2

Fig. 3

Fig. 4

Fig. 5

18

Fig. 6

Fig. 7

EP 1 049 069 A2

Fig. 8

(a)

(b)

13a    13a

13

(c)

13a    13a

(d)

13a

(e)

Fig. 9

EP 1 049 069 A2

Fig. 10

Fig. 11

Fig. 12

Fig. 13

Fig. 14

Fig. 15

1.  Distance between your pupils

    ☐ mm

2.  Maximum value of distance between diagrams (less than 1, more than 3)

    ☐ mm

3.  Minimum value of distance between diagrams (more than 1/2 of 1, less than 2)

    ☐ mm

4.  Pattern

    ☑ Move laterally

    ☑ Move vertically                    Number of groups    6.  Theme

    ☑ Display a plurality of groups at a time ──→ ☐        ○ Universe
                                                          ⊙ Sea            Preview
    ☑ Reduce size of images as they go far                ○ Sky            display
    ☑ Deform or animate the images                        ○ Bird
    ☑ Keep distance between images uniform

5.  Setting of automatic execution

    ○ Actuate manually

    ⊙ Actuate automatically after predetermined time period           ↱ time period ☐ minutes

    ○ Actuate automatically after predetermined unused time period ⤴

        ▭              ▭

    Setting completed        Cancelled

Fig. 16

EP 1 049 069 A2

Video 1 : Normal image

Video 2 : Stereoscopically visible image

102 Video switcher

101 TV monitor

103

Fig. 17